(19) Europäisches Patentamt
European Patent Office
Office européen des brevets

(11) **EP 3 635 437 B1**

(12) **EUROPÄISCHE PATENTSCHRIFT**

(45) Veröffentlichungstag und Bekanntmachung des Hinweises auf die Patenterteilung:
**03.08.2022   Patentblatt 2022/31**

(21) Anmeldenummer: **18723818.3**

(22) Anmeldetag: **09.05.2018**

(51) Internationale Patentklassifikation (IPC):
**G01S 17/10** (2020.01)     **G01S 7/4861** (2020.01)
**G01S 7/484** (2006.01)     **G01S 7/487** (2006.01)
**G01S 17/931** (2020.01)

(52) Gemeinsame Patentklassifikation (CPC):
**G01S 17/10; G01S 7/484; G01S 7/4861; G01S 7/487; G01S 17/931**

(86) Internationale Anmeldenummer:
**PCT/EP2018/061962**

(87) Internationale Veröffentlichungsnummer:
**WO 2018/224234 (13.12.2018 Gazette 2018/50)**

(54) **BETRIEBSVERFAHREN UND STEUEREINHEIT FÜR EIN LIDAR-SYSTEM, LIDAR-SYSTEM UND ARBEITSVORRICHTUNG**

OPERATING METHOD AND CONTROL UNIT FOR A LIDAR SYSTEM, LIDAR SYSTEM, AND WORK MACHINE

PROCÉDÉ DE FONCTIONNEMENT ET UNITÉ DE COMMANDE D'UN SYSTÈME LIDAR, SYSTÈME LIDAR ET DISPOSITIF DE TRAVAIL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.06.2017   DE 102017209643**

(43) Veröffentlichungstag der Anmeldung:
**15.04.2020   Patentblatt 2020/16**

(73) Patentinhaber: **Robert Bosch GmbH**
**70442 Stuttgart (DE)**

(72) Erfinder:
• **SCHNITZER, Reiner**
**72762 Reutlingen (DE)**
• **HIPP, Tobias**
**72379 Hechingen (DE)**

(56) Entgegenhaltungen:
**DE-A1-102014 207 599     US-A1- 2014 233 942**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Stand der Technik

Die vorliegende Erfindung betrifft ein Betriebsverfahren und eine Steuereinheit für ein LiDAR-System, ein LiDAR-System als solches sowie eine Arbeitsvorrichtung und insbesondere ein Fahrzeug.

Zur Umfelderkennung von Arbeitsvorrichtungen und insbesondere von Fahrzeugen werden vermehrt so genannte LiDAR-Systeme eingesetzt, welche ausgebildet sind, ein Sichtfeld mit Licht oder Infrarotstrahlung zu beaufschlagen und von dem Sichtfeld zurückgeworfene Strahlung zur Analyse des Sichtfeldes und zur Detektion von darin enthaltenen Objekten zu erfassen und auszuwerten. Um bei gepulst betriebenen LiDAR-Systemen ein Übersprechen und Störungen durch andere Signalquellen zu reduzieren, wird oft ein pulssequenzcodiertes Vorgehen für den Betrieb des jeweiligen LiDAR-Systems aufgegriffen, wobei im Zusammenhang mit signalangepassten Filtern eine Verbesserung in der Erkennungsgenauigkeit erzielt werden kann. Derartige LiDAR-Systeme sind zum Beispiel aus den Dokumenten US 2014/233942 A1 und DE 10 2014 207599 A1 bekannt.

In vielen Situationen ist diese Erkennungsgenauigkeit jedoch nicht ausreichend.

Offenbarung der Erfindung

Das erfindungsgemäße Betriebsverfahren für ein pulssequenzcodiert betreibbares LiDAR-System mit den Merkmalen des Anspruchs 1 weist demgegenüber den Vorteil auf, dass eine weitere Steigerung der Erkennungsgenauigkeit ohne apparativen Mehraufwand erzielt werden kann. Dies wird erfindungsgemäß mit den Merkmalen des Anspruchs 1 dadurch erreicht, dass ein Betriebsverfahren für ein pulssequenzcodiert betreibbares

LiDAR-System geschaffen wird, welches mit einem SPAD-basierten Detektorelement betrieben wird, bei welchem eine Totzeit des SPAD-basierten Detektorelements erfasst wird und bei welchem im Sendebetrieb des LiDAR-Systems ein minimaler zeitlicher Abstand zeitlich direkt oder unmittelbar aufeinanderfolgend auszusendender oder ausgesandter Sendepulse an Primärlicht so bestimmt und/oder bemessen wird, dass er der Totzeit zumindest annähernd entspricht und diese insbesondere - zumindest leicht - übersteigt, und die Totzeit des SPAD-basierten Detektorelements wiederholt während eines normalen Betriebs des zu Grunde liegenden LiDAR-Systems erfasst wird. Auf Grund der Eigenschaften eines SPAD-basierten Detektorelements mit dem Auftreten einer entsprechenden Totzeit ergibt sich aus dem reinen Abwarten der Totzeit nach einem Detektionsereignis in vorteilhafter Weise eine gesteigerte Nachweiswahrscheinlichkeit für einlaufende Photonen, so dass eine entsprechende Wahl des zeitlichen Abstandes für ausgesandte Sendepulse und entsprechend ein sich daraus ergebender zeitlicher Abstand empfangener Pulse die Wahrscheinlichkeit für den Nachweis einfallenden Sekundärlichts eines Empfangspulses steigern.

Die Unteransprüche zeigen bevorzugte Weiterbildungen der Erfindung.

Besonders einfache Verhältnisse stellen sich bei dem erfindungsgemäßen Betriebsverfahren gemäß einer vorteilhaften Weiterbildung dann ein, wenn der minimale zeitliche Abstand zeitlich direkt oder unmittelbar aufeinanderfolgend auszusendender oder ausgesandter Sendepulse an Primärlicht einen konstanten Wert aufweist.

Besonders geeignete Verhältnisse stellen sich bei dem erfindungsgemäßen Betriebsverfahren dann ein, wenn der minimale zeitliche Abstand zeitlich direkt oder unmittelbar aufeinanderfolgend auszusendender oder ausgesandter Sendepulse an Primärlicht im Verhältnis zur Totzeit des SPAD-basierten Detektorelements der folgenden Relation (I)

$$ttot < t\min \le (1+x) \cdot ttot \qquad (I)$$

genügt, wobei $ttot$ die Totzeit des SPAD-basierten Detektorelements, $tmin$ den minimalen zeitlichen Abstand direkt oder unmittelbar aufeinanderfolgender Sendepulse an Primärlicht und x einen - zumindest temporär - konstanten positiven und insbesondere von null verschiedenen Wert bezeichnen.

Dabei kann der Wert x die Relation $x \le 0,3$ erfüllen, vorzugsweise die Relation $x \le 0,2$ und weiter bevorzugt die Relation $x \le 0,1$ und insbesondere die Relation $x = 0,1$.

Von besonderem Wert ist eine Situation, bei welcher der minimale zeitliche Abstand $tmin$ die Relation $tmin = 1,1 \cdot ttot$ erfüllt.

Ein besonders hohes Maß an Flexibilität stellt sich bei einer Weiterbildung des erfindungsgemäßen Betriebsverfahrens dann ein, wenn die Totzeit des SPAD-basierten Detektorelements durch ein Messverfahren erfasst wird, insbesondere in zeitlich wiederholter Weise und/oder im Zusammenhang mit einem Verfahren des maschinellen Lernens. Durch diese Maßnahmen können ein Sensorwechsel, Alterungsprozesse und/oder sich ändernde Betriebsbedingungen, die jeweils auch zu unterschiedlichen effektiven Totzeiten beim Detektorelement führen können, berücksichtigt werden, und zwar ohne dass es eines Eingriffes durch den Nutzer bedarf.

Erfindungsgemäß ist vorgesehen, dass die Totzeit des SPAD-basierten Detektorelements wiederholt erfasst wird, und zwar während eines normalen Betriebs des zu Grunde liegenden LiDAR-Systems. Das bedeutet insbesondere, dass im laufenden Betrieb des LiDAR-Systems geprüft werden kann ob sich Änderungen im Detektionsverhalten beim zu Grunde liegenden SPAD-basierten Detektorelements ergeben haben, um diese dann gegebenenfalls zu berücksichtigen.

Ferner betrifft die vorliegende Erfindung eine Steuereinheit für ein LiDAR-System, welche eingerichtet ist, eine Ausführungsform des erfindungsgemäßen Betriebsverfahrens auszuführen, zu veranlassen, zu steuern und/oder in einem erfindungsgemäßen Betriebsverfahren verwendet zu werden.

Ferner schafft die vorliegende Erfindung auch ein LiDAR-System zur optischen Erfassung eines Sichtfeldes als solches. Das vorgeschlagene LiDAR-System ist eingerichtet, das erfindungsgemäße Betriebsverfahren auszuführen oder in einem derartigen erfindungsgemäßen Betriebsverfahren verwendet zu werden. Insbesondere ist das erfindungsgemäße LiDAR-System dazu eingerichtet, im Zusammenhang mit einer Arbeitsvorrichtung oder mit einem Fahrzeug verwendet zu werden.

Das erfindungsgemäße LiDAR-System ist ausgebildet mit einer Senderoptik zum Bereitstellen und Aussenden von Primärlicht in das Sichtfeld, mit einer Empfängeroptik zum Empfangen von Sekundärlicht aus dem Sichtfeld, welche eine Detektoranordnung aufweist, bei welcher über mindestens ein SPAD-basiertes Detektorelement das Sekundärlicht detektierbar ist, und mit einer erfindungsgemäß ausgestalteten Steuereinheit zur Steuerung des Betriebs der Senderoptik und/oder der Empfängeroptik auf der Grundlage einer Totzeit des SPAD-basierten Detektorelements.

Schließlich schafft die vorliegende Erfindung auch eine Arbeitsvorrichtung und insbesondere ein Fahrzeug, welches mit einem erfindungsgemäß ausgestalteten LiDAR-System zur optischen Erfassung eines Sichtfeldes ausgebildet ist.

Kurzbeschreibung der Figuren

Unter Bezugnahme auf die beigefügten Figuren werden Ausführungsformen der Erfindung im Detail beschrieben.

Figur 1              zeigt in Form eines schematischen Blockdiagramms eine Ausführungsform des erfindungsgemäßen LiDAR-Systems.

Figuren 2 und 3      erläutern in Form von Graphen anhand eines Einzelpulses des Primärlichts den Zusammenhang zwischen Totzeit und Detektionswahrscheinlichkeit in einem SPAD-basierten Detektorelement.

Figuren 4 und 5      erläutern in Form von Graphen den Zusammenhang zwischen Photonenfluss und mittlerer Detektionsrate bei einer zusammenhängenden Abfolge von einzelnen Pulsen des Primärlichts.

Bevorzugte Ausführungsformen der Erfindung

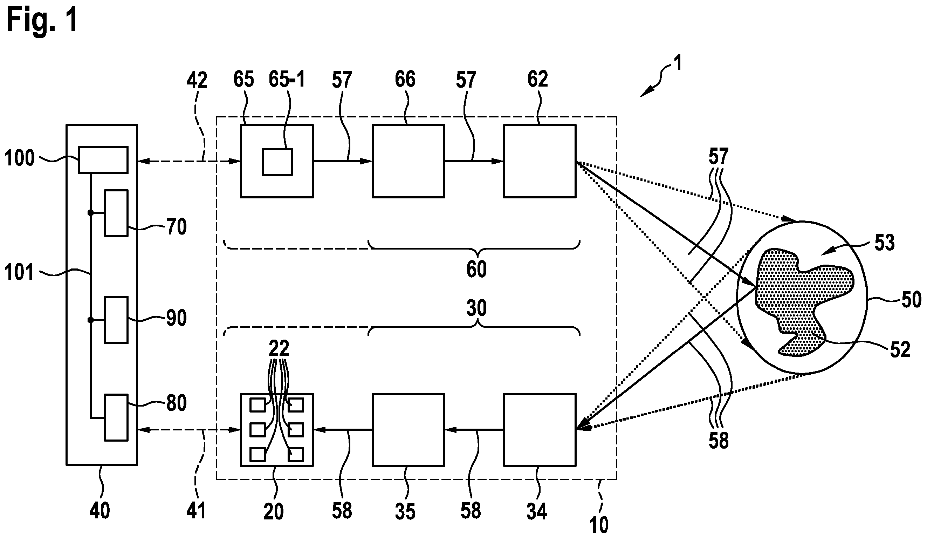

Nachfolgend werden unter Bezugnahme auf die Figuren 1 bis 5 Ausführungsbeispiele der Erfindung und der technische Hintergrund im Detail beschrieben. Gleiche und äquivalente sowie gleich oder äquivalent wirkende Elemente und Komponenten werden mit denselben Bezugszeichen bezeichnet. Nicht in jedem Fall ihres Auftretens wird die Detailbeschreibung der bezeichneten Elemente und Komponenten wiedergegeben.

Figur 1 zeigt nach Art eines Blockdiagramms in schematischer Weise eine Ausführungsform des erfindungsgemäßen LiDAR-Systems 1.

Das in Figur 1 dargestellte und für den pulssequenzcodierten Betrieb geeignete LiDAR-System 1 besteht neben einer Steuer- und Auswerteeinheit 40 aus der dem Betrieb des LiDAR-Systems 1 zu Grunde liegenden optischen Anordnung 10 mit einer Lichtquelleneinheit 65, zum Beispiel mit einer oder mit mehreren Lichtquellen 65-1, einer Senderoptik 60, einer Empfängeroptik 30 und einer Detektoranordnung 20. Die Steuerung des Betriebs des LiDAR-Systems 1 sowie die Auswertung der durch das LiDAR-System 1 empfangenen Signale erfolgt durch die Steuer- und Auswerteeinheit 40.

Im Betrieb wird durch Steuerung und Veranlassung mittels der Steuer- und Auswerteeinheit 40 über eine Steuerleitung 42 die Lichtquelleneinheit 65 zur Erzeugung und Ausgabe primären Lichts 57 veranlasst, welches auch als Primärlicht bezeichnet wird. Das Primärlicht 57 wird mittels einer Strahlformungsoptik 66 entsprechend dem Anwendungsfall modelliert und dann mittels einer sendeseitig abtastenden Ablenkoptik 62 in ein Sichtfeld 50 mit einem darin enthaltenen Objekt 52 ausgesandt.

Bei der vorliegenden Erfindung liegt der Fokus auf einem Pulsbetrieb der Lichtquelleneinheit 65 und der jeweiligen Lichtquellen 65-1, zum Beispiel in Form von gepulsten Laserquellen.

Das aus dem Sichtfeld 50 und vom Objekt 52 reflektierte Licht wird auch als sekundäres oder Sekundärlicht 58 bezeichnet und in der Empfängeroptik 30 mittels eines Objektivs 34 aufgenommen, gegebenenfalls von einer vorgesehenen Sekundäroptik 35 weiterbehandelt und dann an eine Detektoranordnung 20 mit einem oder mit mehreren Sensorelementen oder Detektorelementen 22 übertragen. Die Sensorelemente 22 der Detektoranordnung 20 erzeugen ihrerseits das Sekundärlicht 58 repräsentierende Signale, die mittels einer Steuer- und Messleitung 41 an die Steuer- und Auswerteeinheit 40 übertragen werden.

Gemäß der vorliegenden Erfindung arbeiten die vorgesehenen Detektorelemente 22 der Detektoranordnung 20 nach dem SPAD-Prinzip (SPAD : single photon avalanche diode).

Grundlage eines jeweiligen Detektorelements 22 ist also eine Avalanche-Photodiode, welche bereits bei Aufnahme eines einzelnen Photons in Sättigung geht und deshalb vorzugsweise mit einer entsprechenden Vorbeschaltung zum Beispiel im Geigermodus betrieben wird. Aufgrund dieser Umstände kann auch erfindungsgemäß die Erhöhung der Detektionswahrscheinlichkeit nach Ablauf einer bestimmten Zeitspanne, die größer ist als die durch die Eigenschaften der Photodiode des Detektorelements 22 gegebenen Totzeit $t_{tot}$ erfindungsgemäß ausgenutzt werden, was jedoch den Betrieb nach dem erfindungsgemäßen Betriebsverfahren voraussetzt.

Die Ausführungsform der Steuer- und Auswerteeinheit 40 gemäß Figur 1 besteht aus einem übergeordneten Steuersystem 100, welches mittels eines Busses 101 mit einer Sendeeinheit 70, einer Empfangseinheit 80 und einer Korrelationseinheit 90 verbunden ist.

Es können das Steuersystem 100 und die Einheiten 70, 80 und 90 tatsächlich als separate Komponenten innerhalb der Steuer- und Auswerteeinheit 40 ausgebildet sein.

Es kann jedoch ein LiDAR-System 1 ausgebildet sein, bei welchem ein oder mehrere der Komponenten der Steuer- und Auswerteeinheit 40 miteinander kombiniert und integriert ausgebildet sind, so dass die Darstellung gemäß Figur 1 nur der Darstellung der vorhandenen Komponenten dem Grundsatz nach dient, die konkrete Architektur dadurch jedoch nicht unbedingt widergespiegelt wird und von der Darstellung aus Figur 1 abweichen kann.

Erfindungsgemäß liegt der Fokus beim Betrieb des LiDAR-Systems auf dem Pulsprinzip, bei welchem das Sichtfeld 50 im Impulsbetrieb der Lichtquelleneinheit 65 mit den Lichtquellen 65-1 mit dem Primärlicht 57 beleuchtet und untersucht wird.

Um eine genaue Detektion zu ermöglichen, wird erfindungsgemäß einerseits das die Totzeit $t_{tot}$ des SPAD-basierten Detektorelements 22 des LiDAR-Systems 1 erfasst und im Sendebetrieb berücksichtigt, indem ein minimaler zeitlicher Abstand $t_{min}$ zeitlich direkt oder unmittelbar aufeinanderfolgend ausgesandter Sendepulse 57-1, ..., 57-4 des Primärlichts 57, die unten im Detail erläutert werden und in den weiteren Figuren gezeigt sind, so bemessen wird, dass er der Totzeit $t_{tot}$ zumindest annähernd entspricht und diese insbesondere zumindest leicht übersteigt, wie dies oben bereits im Detail dargelegt wurde.

Als weitere Maßnahme zur Steigerung der Detektionswahrscheinlichkeit der Pulssequenzen mit Sendepulsen 57-1, ..., 57-4 des Primärlichts 52 auf der Seite der Empfängeroptik 30 kann im Zusammenhang mit der Detektoranordnung 20 in der Steuereinheit 40 mittels der Korrelationseinheit 90 eine Signalkorrelation zwischen der Sendeeinheit 70 und der Empfangseinheit 80 hergestellt werden, zum Beispiel im Sinne eines signalangepassten Filters oder Optimalfilters.

Dabei erfolgt die Kopplung zwischen der Steuereinheit 40 und der Lichtquelleneinheit 65 über die Steuerleitung 42. Die Kopplung zwischen der Steuereinheit 40 und der Detektoranordnung 20 erfolgt über die Steuerleitung 41.

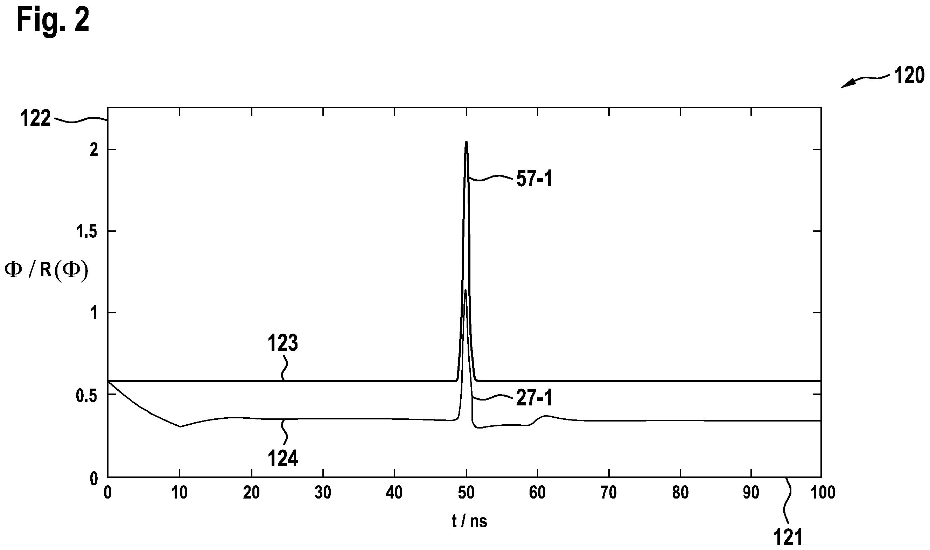

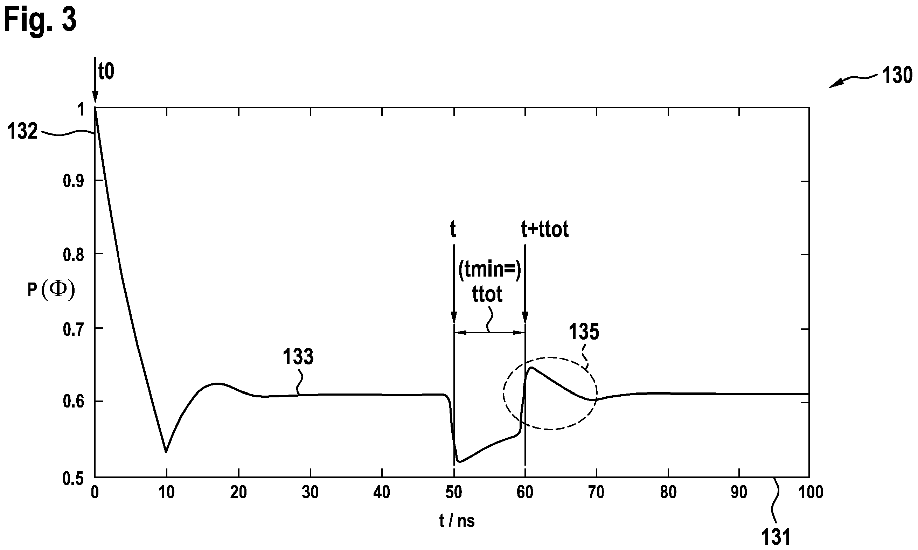

Die Figuren 2 und 3 erläutern in Form von Graphen 120 und 130 anhand eines Einzelpulses 57-1 des Primärlichts 57 den Zusammenhang zwischen Totzeit $t_{tot}$ und Detektionsrate $R(\Phi)$ oder Detektionswahrscheinlichkeit $P(\Phi)$ in einem SPAD-basierten Detektorelement 22 in Abhängigkeit vom Photonenfluss $\Phi$.

An den Abszissen 121 und 131 ist jeweils die Zeit t aufgetragen.

Die Ordinate 122 im Graphen 120 der Figur 2 trägt den Photonenfluss $\Phi$ für die Spur 123, welche einen Einzelpuls 57-1 des Primärlichts 57 repräsentiert, sowie die Detektionsrate $R(\Phi)$ in der Spur 124 zu diesem Einzelpuls 57-1. Die Maßeinheiten sind relative Einheiten. Zu erkennen ist, dass die Detektionsrate $R(\Phi)$ der Spur 124 im Wesentlichen dem Photonenfluss $\Phi$ der Spur 123 folgt.

Die Ordinate 132 im Graphen 130 der Figur 3 trägt die auf 1 normierte Detektionswahrscheinlichkeit $P(\Phi)$ für das SPAD-basierte Detektorelement 22.

Die Detektionswahrscheinlichkeit $P(\Phi)$ zeigt den im Graphen 130 der Figur 3 eingezeichneten Verlauf der Spur 133 und, dass bei einem kontinuierlichen Photonenfluss zu Beginn der Anregung beim Zeitpunkt t = 0 die Detektionswahrscheinlichkeit $P(\Phi)$ ist bei $t_0 = 0$ zunächst maximal bei 1 und pendelt sich im Verlauf der kontinuierlichen Anregung auf einen bestimmten Wert - hier etwa 0,6 - ein. Zum Zeitpunkt t erfolgt dann ein Einzelpuls 57-1, also eine Anregung mit erhöhtem Photonenfluss $\Phi$. Nach kurzzeitiger Erhöhung der Detektionswahrscheinlichkeit $P(\Phi)$ auf Grund des durch den Puls 57-1 gesteigerten Photonenflusses sinkt diese zunächst ab und zeigt dann nach dem Verstreichen der Totzeit $t_{tot}$ zum Zeitpunkt $t + t_{tot}$ einen erhöhten Wert, nämlich einen Peak in dem mit dem Kreis 135 bezeichneten Gebiet des Graphen 130.

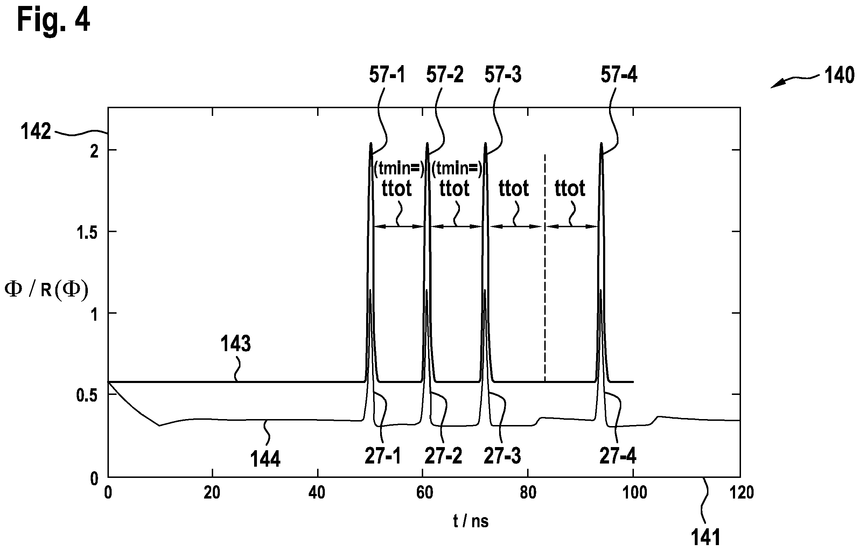

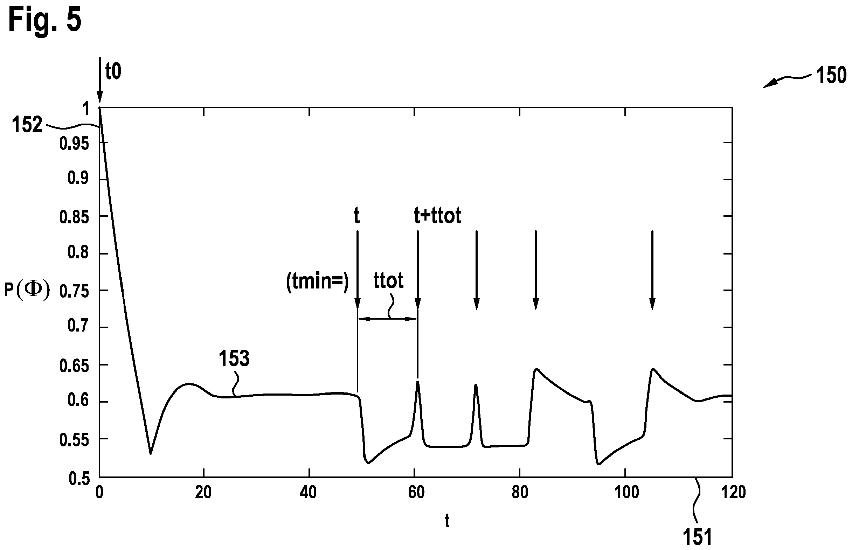

Figuren 4 und 5 erläutern in Form von Graphen 140 und 150 anhand einer Pulssequenz aus einer Mehrzahl von Einzelpulsen 57-1, ..., 57-4 des Primärlichts 57 den Zusammenhang zwischen Totzeit $t_{tot}$ und Detektionsrate $R(\Phi)$ oder Detektionswahrscheinlichkeit $P(\Phi)$ in einem SPAD-basierten Detektorelement 22 in Abhängigkeit vom Photonenfluss $\Phi$.

An den Abszissen 141 und 141 ist jeweils die Zeit t aufgetragen.

Die Ordinate 142 im Graphen 140 der Figur 4 trägt den Photonenfluss Φ für die Spur 143, welche die Pulsfolge mit den Einzelpulsen 57-1, ..., 57-4 des Primärlichts 57 repräsentiert, sowie die Detektionsrate R(Φ) in der Spur 144 zu dieser Pulsfolge. Die Maßeinheiten sind relative Einheiten. Zu erkennen ist, dass die Detektionsrate R(Φ) der Spur 144 im Wesentlichen dem Photonenfluss Φ der Spur 143 folgt.

Im Graphen 150 gemäß Figur 5 ist in der Spur 153 die entsprechende Abhängigkeit der Detektionswahrscheinlichkeit P(Φ) am SPAD-basierten Detektorelement 22 dargestellt, wobei wieder ein kontinuierlicher Photonenfluss zu Grunde gelegt wird, der im eingeschwungenen Zustand zu einer Detektionswahrscheinlichkeit von etwa 0,6 führt, wobei zum Zeitpunkt t = t0 + 50 ns eine Anregung mit zusätzlichen Einzelpulsen 57-1, ..., 57-4 erfolgt. Zu den mit senkrechten und nach unten gerichteten Pfeilen markierten Zeitpunkten sind in der Spur 153 für die Detektionswahrscheinlichkeit P(Φ) wieder lokal Maxima erkennbar, die einen zeitlichen Abstand zueinander aufweisen, welcher der Totzeit ttot des SPAD-basierten Detektorelements 22 entspricht.

Entsprechend kann bei der Anregung mit einer Pulsfolge von Einzelpulsen 57-1, ..., 57-4 des Primärlichts 57 gemäß Figur 4 ein zeitlicher Abstand zwischen den einzelnen Pulsen der Pulsfolge 57-1, ..., 57-4 gewählt werden, welcher der Totzeit *ttot* des SPAD-basierten Detektorelements 22 in etwa entspricht, wodurch erfindungsgemäß in vorteilhafter Weise die zu diesen Zeitpunkten erhöhte Detektionswahrscheinlichkeit P(Φ) genutzt wird und zu einer entsprechend erhöhten Detektionsrate R(Φ) führt.

Weitere Details dazu finden sich in der weiter unten folgenden Beschreibung, dort werden diese und weitere Merkmale und Eigenschaften der vorliegenden Erfindung an Hand der folgenden Darlegungen weiter erläutert:
Es ist an sich bekannt, bei LiDAR-Systemen anstelle von Einzelpulsen eine zufällig oder pseudo-zufällig kodierte Sequenz von Lichtpulsen als Primärlicht 57 auszusenden.

Zur Detektion im Empfänger 20 der Empfängeroptik 30 wird dabei die empfangene Pulsfolge mit der versendeten Pulsfolge - z.B. mithilfe eines Optimalfilters oder eines signalangepassten Filters (englisch: matched filter) korreliert. Dies hat den positiven Effekt, dass die Störsicherheit gegenüber anderen parallel betriebenen LiDAR-Systemen 1 verbessert ist, weil der Sensor idealerweise nur sensitiv ist für die selbst versendete Pulsfolge, nicht aber für Pulse anderer Systeme.

Im Falle, dass die vorhandenen Laser 65-1 oder Lasertreiberschaltungen und nicht die Augensicherheitsnorm den für die versendete Leistung begrenzenden Faktor darstellen, besteht ein weiterer Vorteil darin, dass hier die erlaubte Energie auf mehrere Pulse verteilt wird.

Es ist eine Aufgabe der vorliegenden Erfindung, die Vorteile eines kodierten Multipuls-LiDAR-Systems zu erweitern, insofern als Detektorelement 22 Single-Photon-Avalanche-Dioden (SPAD) zum Einsatz kommen.

Auf Grund der speziellen Eigenschaften dieser Detektordioden als Detektorelemente 22 kann bei entsprechend korrekter Wahl der Pulsfolge die Detektionswahrscheinlichkeit P(Φ) der Pulse 57-1, ..., 57-4 innerhalb einer Sequenz von Pulsen erhöht werden. Die zeitlichen Pulsabstände tmin innerhalb einer Sequenz werden in vorteilhafter Weise von der Totzeit ttot der zu Grunde liegenden SPAD abgeleitet, so dass z.B. der Pulsabstand im Bereich der einfachen bis zur 1,1-fachen Totzeit ttot liegt, so dass also gilt: $1,0 \times ttot \leq tmin \leq 1,1 \times Totzeit$.

Ein Kern der vorliegenden Erfindung besteht darin, die minimalen zeitlichen Abstände tmin zwischen den Pulsen 57-1, ..., 57-4 innerhalb einer Pulssequenz für das ausgesandte Primärlicht 57 von der Totzeit ttot einer als Detektor oder Detektorkomponente 22 verwendeten SPAD abhängig zu machen und insbesondere abzuleiten. Auf diese Weise werden die Detektionswahrscheinlichkeit P(Φ) und mithin die Detektionsrate R(Φ) für die Pulsfolge erfindungsgemäß gesteigert.

Aufgebaut ist das System 1 wie ein typischer gepulster LiDAR-Sensor, mit der Besonderheit, dass als Detektorelemente 22 der Detektoranordnung 20 SPADs eingesetzt werden. Durch den Betrieb der SPADs im Geiger-Modus folgt auf die Detektion eines Photons eine durch die Geometrie der SPAD und die Pixelbeschaltung definierte und bekannte Totzeit ttot.

Figur 2 beschreibt in Form eines Graphen 120 die mittlere Zählrate R(Φ) in der Spur 124 einer SPAD als Sensorelement 22 auf einen dort ebenfalls dargestellten willkürlichen Eingangsphotonenfluss Φ der Spur 123. Die Lücke zwischen den beiden Spuren 123, 124 für die Zählrate und für den Photonenfluss Φ ist auf die Totzeit ttot der SPAD 22 zurückzuführen, da auf Grund der Totzeit ttot nicht beliebig hohe Photonenraten möglich sind.

Figur 3 zeigt für den angenommenen Photonenfluss Φ abhängig von der Zeit die Wahrscheinlichkeit P(Φ) als Spur 133, dass die SPAD 22 bereit ist für eine Photonendetektion.

In diesem Beispiel wird die SPAD 22 zum Zeitpunkt t0 = 0 durch den Photonenfluss Φ aktiviert. Dort ist die Bereitschaftswahrscheinlichkeit zunächst gleich 1. Anschließend pendelt sich die Wahrscheinlichkeit P(Φ) für den gegebenen gleich bleibenden DC-Fluss Φ an Photonen bei etwa 0,6 ein, bis zum Zeitpunkt t = 50 ns ein Intensitätspuls an Photonen empfangen wird.

Auf Grund der höheren Photonenrate in diesem Moment ist die Wahrscheinlichkeit P(Φ) einer SPAD-Detektion höher und daraus folgend die Bereitschaftswahrscheinlichkeit im Anschluss niedriger. Daraus kann wiederum abgeleitet werden, dass durch die erhöhte Wahrscheinlichkeit der Detektion im Moment des Pulses die Bereitschaftswahrscheinlichkeit eine Totzeit ttot später verglichen mit dem eingeschwungenen Zustand höher ist. Dies ergibt den Überschwinger in der Spur 133 für die Detektionswahrscheinlichkeit P(Φ). Dies ist durch den im Kreis 135 hervorgehobenen Bereich verdeutlicht.

Die vorliegende Erfindung nutzt genau diese Überhöhung der Detektionswahrscheinlichkeit P(Φ) in vorteilhafter Weise aus, indem die Pulsfolge zeitlich - insbesondere exakt - so abgestimmt wird, dass im zeitlichen Bereich der Überhöhung der Bereitschaftswahrscheinlichkeit P(Φ) der nächste der Pulse 57-1, ..., 57-4 in der Sequenz durch zeitlich entsprechend abgestimmtes Aussenden der Sendepulse 57-1, ..., 57-4 des Primärlichts 57 empfangen wird.

Figur 4 zeigt beispielhaft eine Pulssequenz in der Spur 143 - hier binär mit der Wertefolge 1,1,1,0,1.

Es ist zu erkennen, dass die Pulse 57-1, ..., 57-4 an zweiter und dritter Stelle auf Grund des beschriebenen Effektes eine höhere Amplitude haben. Dargestellt ist der Sachverhalt für eine Sequenzwiederholung. Der Sensor 22 wird im Einsatz diese Sequenz pro Messung häufig wiederholen, mit z.B. etwa 10 bis 500 Wiederholungen, so dass der Effekt einen signifikanten Beitrag zur gesamten Detektionswahrscheinlichkeit leisten kann.

Ebenso können weiterhin bekannte Schaltungstechniken zur Hintergrundlichtunterdrückung in Verbindung mit SPADs 22 - wie z.B. Macropixel und Concurrence-Detektion - eingesetzt werden.

Das erfindungsgemäße LiDAR-Konzept kann bei allen gepulst arbeitenden LiDAR-Systemen 1 mit SPAD-basierter Detektoranordnung 20 eingesetzt werden.

## Patentansprüche

1. Betriebsverfahren für ein pulssequenzcodiert betreibbares und mit einem SPAD-basierten Detektorelement (22) ausgebildetes LiDAR-System (1), bei welchem

   - eine Totzeit (ttot) des SPAD-basierten Detektorelements (22) erfasst wird und
   - im Sendebetrieb des LiDAR-Systems (1) ein minimaler zeitlicher Abstand (tmin) zeitlich direkt oder unmittelbar aufeinanderfolgend auszusendender oder ausgesandter Sendepulse (57-1, ..., 57-4) an Primärlicht (57) so bemessen wird, dass er der Totzeit (ttot) zumindest annähernd entspricht und diese insbesondere - zumindest leicht - übersteigt, **dadurch gekennzeichnet, dass**
   - die Totzeit (ttot) des SPAD-basierten Detektorelements (22) wiederholt während eines normalen Betriebs des zu Grunde liegenden LiDAR-Systems (1) erfasst wird.

2. Betriebsverfahren nach Anspruch 1, bei welchem der minimale zeitliche Abstand (tmin) zeitlich direkt oder unmittelbar aufeinanderfolgend auszusendender oder ausgesandter Sendepulse (57-1, ..., 57-4) an Primärlicht (57) einen konstanten Wert aufweist.

3. Betriebsverfahren nach einem der vorangehenden Ansprüche, bei welchem der minimale zeitliche Abstand (tmin) zeitlich direkt oder unmittelbar aufeinanderfolgend auszusendender oder ausgesandter Sendepulse (57-1, ..., 57-4) an Primärlicht (57) im Verhältnis zur Totzeit (ttot) des SPAD-basierten Detektorelements (22) der folgenden Relation (I)

$$ttot < t\min \leq (1+x) \cdot ttot \qquad \text{(I)}$$

   genügt, wobei *ttot die* Totzeit des SPAD-basierten Detektorelements (22), *tmin* den minimalen zeitlichen Abstand direkt oder unmittelbar aufeinanderfolgender Sendepulse (57-1, ..., 57-4) an Primärlicht (57) und x einen - zumindest temporär - konstanten positiven und insbesondere von null verschiedenen Wert bezeichnen.

4. Betriebsverfahren nach Anspruch 3, bei welchem der Wert x die Relation x ≤ 0,3 erfüllt, vorzugsweise die Relation x ≤ 0,2 und weiter bevorzugt die Relation x ≤ 0,1 und insbesondere die Relation x = 0,1.

5. Betriebsverfahren nach einem der vorangehenden Ansprüche, bei welchem die Totzeit (ttot) des SPAD-basierten Detektorelements (22) durch ein Messverfahren erfasst wird, insbesondere in zeitlich wiederholter Weise und/oder im Zusammenhang mit einem Verfahren des maschinellen Lernens.

6. Steuereinheit (40) für ein LiDAR-System (1), welche eingerichtet ist, ein Betriebsverfahren nach einem der Ansprüche 1 bis 5 auszuführen.

7. LiDAR-System (1) zur pulssequenzcodierten optischen Erfassung eines Sichtfeldes (50), insbesondere für eine Arbeitsvorrichtung oder ein Fahrzeug, mit

- einer Senderoptik (60) zum Bereitstellen und Aussenden von Primärlicht (57) in das Sichtfeld (50),
- einer Empfängeroptik (30) zum Empfangen von Sekundärlicht (58) aus dem Sichtfeld (50), welche eine Detektoranordnung (20) aufweist, bei welcher über mindestens ein SPAD-basiertes Detektorelement (22) das Sekundärlicht (58) detektierbar ist, und
- einer Steuereinheit (40) nach Anspruch 6 zur Steuerung des Betriebs der Senderoptik (60) und der Empfängeroptik (30) auf der Grundlage einer Totzeit (ttot) des SPAD-basierten Detektorelements (22).

8. Arbeitsvorrichtung und insbesondere Fahrzeug, mit einem LiDAR-System (1) nach Anspruch 7 zur optischen Erfassung eines Sichtfeldes (50).

**Claims**

1. Operating method for a LiDAR system (1) that is operable in a pulse-sequence-coded manner and is designed with a SPAD-based detector element (22), in which

   - a dead time (ttot) of the SPAD-based detector element (22) is captured, and
   - a minimum time interval (tmin) between transmission pulses (57-1,..., 57-4) of primary light (57) which are to be sent or have been sent in temporally direct or immediate succession is measured during the transmission operation of the LiDAR system (1) in a manner such that said interval at least approximately corresponds to the dead time (ttot) and in particular - at least slightly - exceeds it, **characterized in that**
   - the dead time (ttot) of the SPAD-based detector element (22) is repeatedly captured during a normal operation of the underlying LiDAR system (1).

2. Operating method according to Claim 1, in which the minimum time interval (tmin) between transmission pulses (57-1,..., 57-4) of primary light (57) which are to be sent or have been sent in temporally direct or immediate succession has a constant value.

3. Operating method according to either of the preceding claims, in which the minimum time interval (tmin) between transmission pulses (57-1,..., 57-4) of primary light (57) which are to be sent or have been sent in temporally direct or immediate succession in relation to the dead time (ttot) of the SPAD-based detector element (22) satisfies the following relation (I)

$$ttot < tmin \leq (1 + x) \cdot ttot \qquad\qquad (I),$$

   wherein ttot denotes the dead time of the SPAD-based detector element (22), *tmin* denotes the minimum time interval between transmission pulses (57-1,..., 57-4) of primary light (57) which are in direct or immediate succession, and x denotes an - at least temporarily - constant positive and in particular non-zero value.

4. Operating method according to Claim 3, in which the value x satisfies the relation $x \leq 0.3$, preferably the relation $x \leq 0.2$, and with further preference the relation $x \leq 0.1$, and in particular the relation $x = 0.1$.

5. Operating method according to any of the preceding claims, in which the dead time (ttot) of the SPAD-based detector element (22) is captured by a measurement method, in particular in a temporally repeated manner and/or in connection with a machine learning method.

6. Control unit (40) for a LiDAR system (1), which is configured to carry out an operating method according to any of Claims 1 to 5.

7. LiDAR system (1) for optically capturing a field of view (50) in a pulse-sequence-coded manner, in particular for a work apparatus or a vehicle, having

   - a transmitter optical unit (60) for providing and emitting primary light (57) into the field of view (50),
   - a receiver optical unit (30) for receiving secondary light (58) from the field of view (50), which has a detector arrangement (20) in which the secondary light (58) is detectable using at least one SPAD-based detector element (22), and
   - a control unit (40) according to Claim 6 for controlling the operation of the transmitter optical unit (60) and the receiver optical unit (30) on the basis of a dead time (ttot) of the SPAD-based detector element (22) .

**8.** Work apparatus and in particular vehicle, having a LiDAR system (1) according to Claim 7 for optically capturing a field of view (50).

**Revendications**

**1.** Procédé de fonctionnement destiné à un système LiDAR (1) pouvant fonctionner de manière codée par séquence d'impulsions et comprenant un élément détecteur (22) basé sur SPAD, dans lequel

- un temps mort (ttot) de l'élément détecteur (22) basé sur SPAD est détecté, et
- en mode émission du système LiDAR (1), un intervalle de temps minimal (tmin) d'impulsions d'émission (57-1, ..., 57-4) de lumière primaire (57), à émettre ou émises de manière directement ou indirectement consécutive dans le temps, est dimensionné de façon à correspondre au moins approximativement au temps mort (ttot), et en particulier à le dépasser, au moins légèrement,
**caractérisé en ce que**
- le temps mort (ttot) de l'élément détecteur (22) basé sur SPAD est détecté de manière répétée pendant un fonctionnement normal du système LiDAR (1) de base.

**2.** Procédé de fonctionnement selon la revendication 1, dans lequel l'intervalle de temps minimal (tmin) d'impulsions d'émission (57-1, ..., 57-4) de lumière primaire (57), à émettre ou émises de manière directement ou indirectement consécutive dans le temps, présente une valeur constante.

**3.** Procédé de fonctionnement selon l'une quelconque des revendications précédentes, dans lequel l'intervalle de temps minimal (tmin) d'impulsions d'émission (57-1, ..., 57-4) de lumière primaire (57), à émettre ou émises de manière directement ou indirectement consécutive dans le temps, satisfait par rapport au temps mort (ttot) de l'élément détecteur (22) basé sur SPAD la relation suivante (I)

$$\text{ttot} < \text{tmin} \leq (1+x) \cdot \text{ttot} \qquad\qquad (I)$$

où ttot désigne le temps mort de l'élément détecteur (22) basé sur SPAD, tmin désigne l'intervalle de temps minimal (tmin) d'impulsions d'émission (57-1, ..., 57-4) de lumière primaire (57) directement ou indirectement consécutives, et x désigne une valeur positive, au moins temporairement constante, et en particulier différente de zéro.

**4.** Procédé de fonctionnement selon la revendication 3, dans lequel la valeur x satisfait la relation $x \leq 0{,}3$, de préférence la relation $x \leq 0{,}2$, et de plus grande préférence la relation $x \leq 0{,}1$, et en particulier la relation $x = 0{,}1$.

**5.** Procédé de fonctionnement selon l'une quelconque des revendications précédentes, dans lequel le temps mort (ttot) de l'élément détecteur (22) basé sur SPAD est détecté par un procédé de mesure, en particulier de manière répétée dans le temps et/ou en relation avec un procédé d'apprentissage machine.

**6.** Unité de commande (40) destinée à un système LiDAR (1), qui est conçue pour exécuter un procédé de fonctionnement selon l'une quelconque des revendications 1 à 5.

**7.** Système LiDAR (1) destiné à une détection optique codée par séquence d'impulsions d'un champ de vision (50), en particulier pour un dispositif de travail ou un véhicule, comprenant

- une optique d'émetteur (60) servant à fournir et à émettre de la lumière primaire (57) dans le champ de vision (50),
- une optique de récepteur (30) servant à recevoir de la lumière secondaire (58) provenant du champ de vision (50), qui présente un agencement de détecteur (20) dans lequel au moins un élément détecteur (22) basé sur SPAD permet de détecter la lumière secondaire (58), et
- une unité de commande (40) selon la revendication 6 servant à commander le fonctionnement de l'optique d'émetteur (60) et de l'optique de récepteur (30) sur la base d'un temps mort (ttot) de l'élément détecteur (22) basé sur SPAD.

8. Dispositif de travail et en particulier véhicule, comprenant un système LiDAR (1) selon la revendication 7 servant à la détection optique d'un champ de vision (50).

Fig. 1

## Fig. 2

EP 3 635 437 B1

**Fig. 3**

EP 3 635 437 B1

Fig. 4

## Fig. 5

**IN DER BESCHREIBUNG AUFGEFÜHRTE DOKUMENTE**

**In der Beschreibung aufgeführte Patentdokumente**

- US 2014233942 A1
- DE 102014207599 A1